Europäisches Patentamt

European Patent Office

Office européen des brevets

(19)

(11) **EP 0 945 830 B1**

(12) **FASCICULE DE BREVET EUROPEEN**

(45) Date de publication et mention
de la délivrance du brevet:
**09.06.2004 Bulletin 2004/24**

(51) Int Cl.$^7$: **G06T 5/00**

(21) Numéro de dépôt: **99200804.5**

(22) Date de dépôt: **16.03.1999**

(54) **Procédé de traitement d'images incluant des étapes de segmentation d'une image multidimensionnelle et appareil d'imagerie médicale utilisant ce procédé**

Bildverarbeitungsverfahren mit multidimensionalen Bildsegmentationsstufen und medizinische Vorrichtung die diese verwendet

Image processing method including multidimensional image segmentation stages and medical imaging apparatus using the same

(84) Etats contractants désignés:
**DE FR GB NL**

(30) Priorité: **24.03.1998 FR 9803603**

(43) Date de publication de la demande:
**29.09.1999 Bulletin 1999/39**

(73) Titulaire: **Koninklijke Philips Electronics N.V.**
**5621 BA Eindhoven (NL)**

(72) Inventeurs:
• **Makram-Ebeid, Shérif**
**75008 Paris (FR)**
• **Philip, Matthieu**
**75008 Paris (FR)**

(74) Mandataire: **Lottin, Claudine**
**Société Civile SPID,**
**156, Boulevard Haussmann**
**75008 Paris (FR)**

(56) Documents cités:
**US-A- 5 458 126** **US-A- 5 604 822**

• **SHAFARENKO L ET AL: "AUTOMATIC WATERSHED SEGEMENTATION OF RANDOMLY TEXTURED COLOR IMAGES" IEEE TRANSACTIONS ON IMAGE PROCESSING, vol. 6, no. 11, novembre 1997 (1997-11), pages 1530-1543, XP000724623**
• **MEYER F ET AL: "MORPHOLOGICAL TOOLS FOR SEGMENTATION: CONNECTED FILTERS AND WATERSHEDS" ANNALES DES TELECOMMUNICATIONS - ANNALS OF TELECOMMUNICATIONS, vol. 52, no. 7/08, juillet 1997 (1997-07), pages 367-379, XP000721442**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un procédé de traitement d'une image multidimensionnelle, formée de points, représentant des objets d'intensités différentes d'un objet à l'autre, limités par leurs bords vis-à-vis d'un fond, ce procédé Incluant des étapes de segmentation d'image. L'invention concerne également un appareil d'imagerie médicale mettant en oeuvre le procédé de segmentation, et en particulier un appareil à rayons X.

L'invention trouve son application dans les systèmes d'imagerie médicale pour la visualisation en relief du système vasculaire.

Par image multidimensionnelle, il faut entendre par exemple une image d'intensité formée de points qui sont des pixels disposés selon une matrice bidimensionnelle dans l'espace avec l'intensité des pixels en troisième dimension ou une image d'intensité formée de points qui sont des voxels disposés selon une matrice tridimensionnelle dans l'espace avec l'intensité des voxels en quatrième dimension. Dans un procédé de traitement d'image, la segmentation détermine des segments qui sont des régions de limage d'intensités différentes. Les limites des segments sont appelées interfaces.

Un procédé de traitement d'images pour réaliser une segmentation d'image est déjà connu de la publication intitulée "Automatic Watershed Segmentation of Randomly Textured Color Images", par Leila Shafarenko *et alii,* IEEE TRANSACTIONS ON IMAGE PROCESSING, VOL. 6, No. 11, NOVEMBER 1997. Cette publication décrit une méthode de traitement d'image couleur bi-dimensionnelle, pour segmenter l'image 2-D en fonction des couleurs. La méthode comprend une première étape de segmentation utilisant une technique appelée "Watershed". L'image couleur est d'abord considérée comme une image-paysage où les reliefs sont donnés par les niveaux de gris (intensité). Les creux des reliefs sont les bassins-versants, et les crêtes coïncident avec des bords de cellules segmentées. Selon cette publication, il faut réaliser une évaluation chromatique des bords. A cet effet, il faut localiser les bords des régions segmentées ou bassins-versants. Cette technique "Watershed" ne fournit pas la position des contours des régions. Pour obtenir cette position, les modules des gradients d'intensité sont calculés, ce qui transforme à la fois les minima et les maxima d'intensité de l'image paysage en des minima d'une fonction. Pour déterminer les maxima correspondant aux positions des bords des régions, une technique appelée "géodésic reconstruction" est ensuite appliquée. En fait, la technique "Watershed" étant seulement adaptée aux images représentées en niveaux de gris, la présente publication propose une modification pour adapter la technique "Watershed" dans l'espace couleur, afin de produire la segmentation des objets représentés en couleur dans l'image.

Un procédé de traitement d'images pour réaliser une segmentation d'image est déjà connu de la publication intitulée "Morphological Tools for segmentation: connected filters and Watersheds", par Fernand MEYER *et alii.,* dans ANN. TELECOMMUN. 52, n° 7, 8, 1997. Le but est de simplifier une image segmentée par une technique "Watershed" tout en évitant de rendre les contours flous. Des filtres connexes successifs sont utilisés. Ces filtres comblent progressivement les vallées de l'image d'abord finement segmentée, de sorte que les bassins-versants sont de moins en moins nombreux. Les segmentations successives associées à des filtres connexes de plus en plus actifs ont une structure d'arbre d'un niveau fin à un niveau plus grossier, et fournissent des fusions entre les régions. Des régions adjacentes peuvent en outre être fusionnée en utilisant un critère de similarité de manière itérative.

Un procédé de traitement d'images pour réaliser une segmentation d'image est déjà connu de la publication intitulée " A Multiscale Algorithm for Image Segmentation by Variational Method " par G. KOEPFLER, C. LOPEZ, J. M. MOREL dans " SIAM J. NUMER. ANAL, vol.31, No.1, pp.282-299, February 1994 ". Le procédé décrit dans cette publication comprend un traitement d'une image bidimensionnelle qui comprend au départ des régions formées de pixels délimitées par des interfaces et dont un certain nombre a à peu près la même intensité. A cet effet, ce procédé comprend une étape qui met en oeuvre un algorithme de segmentation. Le but de l'algorithme proposé est de supprimer le plus grand nombre possible d'interfaces afin de fusionner des régions adjacentes dont les intensités sont pratiquement identiques. Cet algorithme est une fonction de coût appelée Energie. La fusion de deux régions adjacentes est possible seulement dans le cas où elle résulte en une minimisation de la fonction Energie. Cette fonction Energie comprend deux termes : un premier terme prenant en compte la variance d'intensité dans chaque région de l'image, et un second terme prenant en compte la longueur totale des frontières dans l'image pondérée par un paramètre $\lambda$ appelé paramètre d'échelle. La mise en oeuvre de l'algorithme consiste à donner d'abord au paramètre d'échelle $\lambda$ la valeur 1 et à fusionner deux régions adjacentes, s'il s'en trouve, qui minimisent la fonction Energie. Les régions résultantes sont alors réorganisées en éliminant l'interface des deux régions fusionnées, les termes de la fonction Energie sont à nouveau calculés et un nouvel essai de fusion utilisant le paramètre d'échelle $\lambda = 1$ est effectué. Cette opération est recommencée jusqu'à ce qu'il ne se trouve plus aucune région ayant une région adjacente pour fusionner quand le paramètre d'échelle $\lambda = 1$. Les régions résultantes sont réorganisées après chaque fusion en éliminant les Interfaces. On effectue ensuite les mêmes opérations avec le paramètre d'échelle $\lambda = 2$, etc., jusqu'à ce qu'on ne puisse plus minimiser la fonction Energie. Pour finir, les interfaces des régions adjacentes ayant des intensités différentes sont concrétisées par des bords et sont reportées sur l'image d'origine. Dans cet algorithme, lorsque le terme lié à la longueur des interfaces a un coût important, cela incite à enlever l'interface des deux régions adjacentes qui produit ce coût important, à condition que la variance d'intensité entre ces régions soit faible, et donc cela incite à fusionner ces deux régions adjacentes afin de minimiser la fonction Energie. Du fait que l'on cherche à fusionner les régions en commençant par utiliser les plus faibles valeurs du paramètre d'échelle $\lambda$, cela signifie que l'on réalise d'abord une très faible pénalisation des interfaces, et donc que l'on permet à de nombreuses régions adjacentes d'intensité très voisines de conserver très longtemps leur interface. Puis, au fur et à mesure que la valeur du paramètre d'échelle $\lambda$ augmente, les régions sont fusionnées deux à deux de manière lente et graduelle jusqu'à ce que la fonction Energie ne puisse plus être minimisée. Cet algorithme est valable à plusieurs échelles de l'image, d'où la dénomination de $\lambda$ comme paramètre d'échelle, et celle de l'algorithme comme pyramidal.

Un problème important est que le procédé de segmentation connu du document cité est très coûteux en temps de calcul du fait que les régions sont fusionnées de manière très graduelle en utilisant d'abord la plus basse valeur possible du paramètre $\lambda$ et en augmentant la valeur de ce paramètre lentement pas à pas, alors qu'une réorganisation des régions résultantes, avec un nouveau calcul des termes de la fonction Energie, doit être effectuée après chaque fusion pour pouvoir essayer à nouveau de minimiser la fonction Energie et, occasionnellement d'effectuer une autre fusion.

Un autre problème encore plus important est que l'on n'est pas assuré de pouvoir empêcher une fusion entre deux régions adjacentes d'intensités substantiellement égales appartenant néanmoins à des objets différents.

Un but de l'invention est de fournir un procédé de segmentation d'image multidimensionnelle qui soit beaucoup moins gourmand en temps de calcul que le procédé connu du document cité.

Un autre but de l'invention est de fournir un tel procédé de segmentation qui assure de pouvoir d'une part distinguer d'un fond et d'autre part distinguer entre eux des objets différents quel que soit leur niveau d'intensité vis-à-vis les uns des autres et vis-à-vis du fond.

Ces buts sont atteints et les problèmes cités sont résolus au moyen d'un procédé de traitement d'une image selon la Revendication 1.

Dans une application, ce procédé de traitement d'image comprend les éléments de la Revendication 9.

Dans une autre application, un appareil d'imagerie médicale comprend un système d'acquisition d'une séquence d'images, et un système de traitement d'image qui a accès aux données des images et à un système d'affichage des images et qui comprend un processeur mettant en oeuvre un tel procédé de traitement d'image selon l'une des Revendications 1 à 10.

Dans un mode d'application, de ce procédé, l'image multidimensionnelle est une image médicale vasculaire.

Dans une application particulière, un appareil à rayons X est associé à un tel appareil d'imagerie médicale.

L'invention est décrite ci-après en détail, en référence aux figures schématiques annexées, dont la liste est la suivante :

les FIGs.1A et 1B qui représentent sous forme de diagrammes de blocs fonctionnels les étapes d'un procédé de reconstruction d'une image multidimensionnelle segmentée ;
la FIG.2 qui représente sous forme d'un diagramme de blocs fonctionnels les sous-étapes de pré-segmentation du procédé de reconstruction d'image ;
la FIG.3 qui représente sous forme d'un diagramme de blocs fonctionnels les sous-étapes de segmentation proprement dite de ce procédé ;
les FIGs 4A, 4B et 4C qui illustrent respectivement la formation des bassins-versants, et l'élimination des lignes de partage des eaux durant l'étape de pré-segmentation ;
les FIGs.5A et 5B qui représentent respectivement des régions avant et après fusion dans une image bidimensionnelle durant l'étape de fusion ;
les FIGs.6A et 6B qui montrent respectivement un histogramme simple et un histogramme cumulé du paramètre de pondération de la fonction de coût ;
les FIGs.7A, 7B, 7C qui reproduisent respectivement une image médicale 2-D appelée projection représentant une partie du système vasculaire du cerveau, une image 3-D reconstruite à partir de plusieurs projections 2-D obtenue sans traitement de segmentation et une image 3-D reconstruite après segmentation ;
la FIG.8 qui montre un appareil d'imagerie à rayons X.

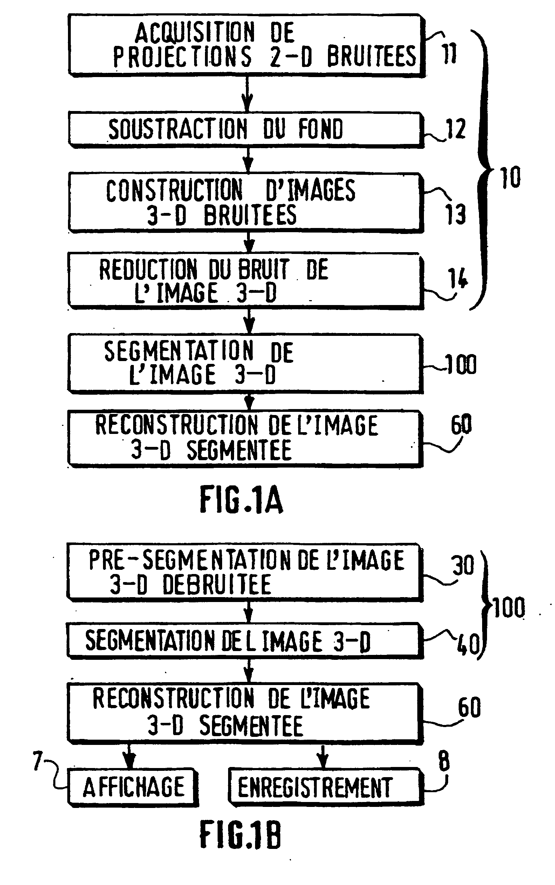

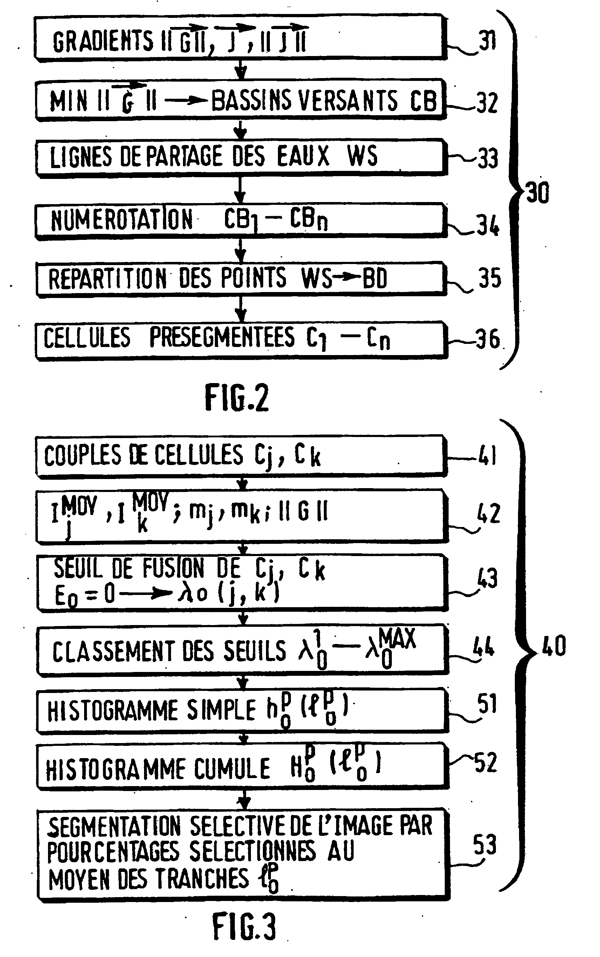

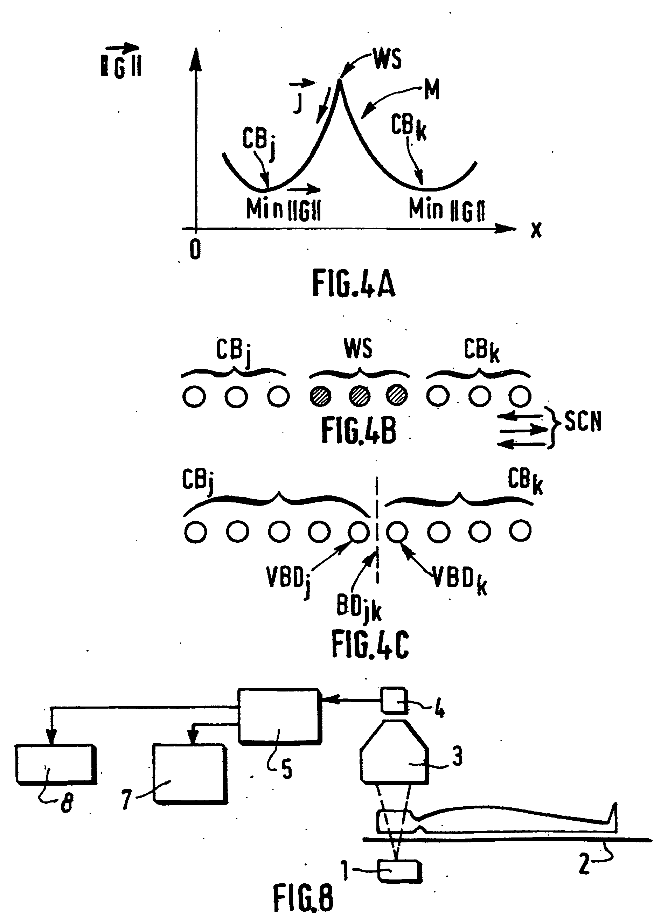

L'invention concerne un procédé de traitement d'image pour la reconstruction d'une image tridimensionnelle, notée 3-D ayant une quatrième dimension d'intensité, à partir d'une image 3-D bruitée, au moyen d'étapes incluant un dé-bruitage de cette image 3-D, une pré-segmentation et une segmentation pour séparer d'un fond rendu uniforme des objets ayant des intensités différentes, mais qui peuvent être substantiellement proches de celle du fond, et pour séparer ces objets entre eux. Les étapes de ce procédé de traitement d'images sont Illustrées sous forme de diagrammes de blocs fonctionnels aux FIGs.1A, 1B, 2A, 2B, et 3. L'invention peut être généralisée à des images ayant une ou plusieurs dimensions spatiales avec une dimension d'intensité, appelées images multidimensionnelles.

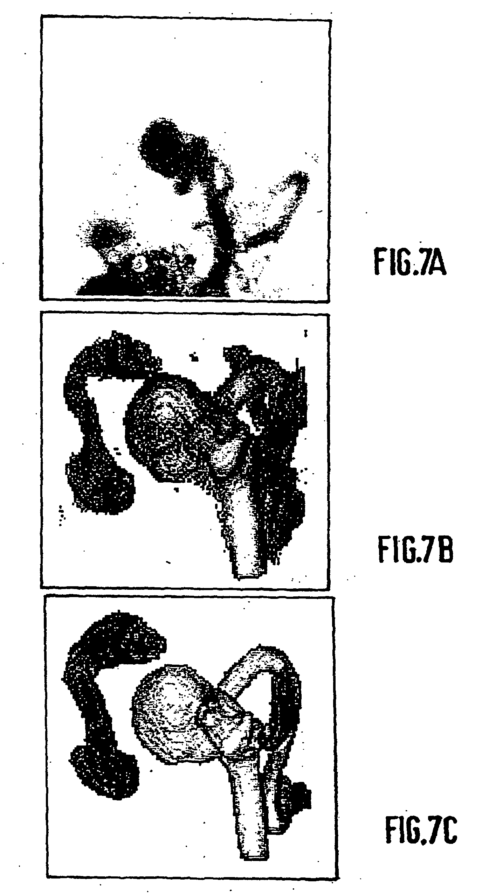

Dans un exemple illustré par la FIG.7B, l'image d'intensité à traiter est une image médicale vasculaire tridimensionnelle donc constituée de voxels ayant trois coordonnées spatiales, avec une quatrième dimension formée par l'intensité des voxels. Dans l'application envisagée, l'image peut contenir $128^3$ voxels.

En référence à la FIG.1A, cette image tridimensionnelle notée 3-D provient d'une reconstruction 10 d'images vasculaires induant des sous-étapes de :

acquisition 11 d'un certain nombre d'images bidimensionnelles de rayons X appelées projections 2-D ; ces projections 2-D, dont l'une est illustrée par la FIG.7A, sont les sorties d'un système d'acquisition d'images de rayons X qui tourne sur 180° dans un plan de rotation autour d'un volume constitué par une partie du corps d'un patient, telle que le cerveau, et qui sont des images 2-D du système vasculaire,

soustraction 12 du fond appliquée aux projections 2-D comprenant : une première acquisition de ces projections à des angles donnés du plan de rotation lorsqu'un produit de contraste a été injecté dans le système vasculaire du patient, une seconde acquisition aux mêmes angles sans produit de contraste et la soustraction des intensités des projections correspondantes à l'aide de marqueurs, pour extraire le fond, résultant en des projections 2-D DSA (de l'anglais Digital Substracted Angiography),

reconstruction 13 d'image 3-D du système vasculaire du cerveau du patient en combinant les projections 2-D DSA de manière appropriée par des méthodes de rétro-projection connues de l'homme du métier.

En référence à la FIG.7A, on constate que les projections 2-D permettent difficilement au praticien de distinguer les différents vaisseaux du système vasculaire. En référence à la FIG.7B, l'image 3-D, qui est affichée en utilisant une technique connue qui réalise un rendu de surfaces volumiques mieux approprié à réaliser un bon diagnostic. En particulier, en observant comparativement les FIGs.7A et 7B, on constate que le vaisseau en forme de S le plus à gauche dans l'image 3-D de la FIG.7B est la reconstruction visible du vaisseau pratiquement indistinct situé dans la zone correspondante de l'image 2-D de la FIG.7A. En outre, une telle image volumique permet au praticien de «voyager» dans l'espace, c'est-à-dire dans le système vasculaire.

Les projections 2-D DSA, illustrées par la FIG.7A, sont bruitées ; donc l'image 3-D reconstruite, illustrée par la FIG.7B, est également bruitée. Ceci provient en particulier du fait que le système d'acquisition n'est pas parfait, que durant l'acquisition la distribution du produit contrastant varie, que la mise en coïncidence de deux projections, pour l'extraction du fond, n'est pas parfaite, et que l'algorithme de reconstruction 3-D lui-même n'est pas parfait. Les imperfections de l'image de la FIG.7B gênent le praticien qui veut évaluer la présence ou l'ampleur d'anomalies.

En référence à la FIG.1A, l'image 3-D reconstruite doit alors subir de préférence deux phases d'optimisation qui sont :

une première phase 14 de réduction du bruit,
une seconde phase 100 de segmentation.

La première phase 14 de réduction du bruit met en oeuvre des méthodes connues de l'homme du métier qui ne sont pas décrites ici. La seconde phase 100 met en oeuvre un procédé de segmentation pour différentier puis séparer des premières régions comprenant exclusivement les informations essentielles, constituées par les vaisseaux dans l'application envisagée, et des secondes régions comprenant tout le reste des éléments de l'image, c'est-à-dire tout ce qui n'est pas des vaisseaux et qui est considéré comme le fond. Les premières et secondes régions de l'image séparées sont appelées «segments». La phase 100 de segmentation doit donc fournir une image 3-D optimisée représentant le système vasculaire sur un fond uniforme.

Un problème particulier apparaît durant cette seconde phase 100 de segmentation du fait que, dans l'image 3-D à segmenter, peuvent se trouver d'une part des vaisseaux de forte intensité et d'autre part des vaisseaux d'intensité plus faible peu différente de l'intensité du fond. Il n'est donc pas possible de segmenter l'image en uniquement une dasse «vaisseaux» et une classe «fond» par exemple en effectuant un simple seuillage appliqué sur l'intensité des voxels. Une telle opération de seuillage aurait plusieurs conséquences fâcheuses possibles. D'abord ce seuillage risquerait d'éliminer les vaisseaux ou les détails de vaisseaux d'intensité peu différente de celle du fond mais qui sont néanmoins des structures spécifiques essentielles différentes du fond. Ensuite, ce seuillage risquerait d'éliminer les fins détails des vaisseaux ou les vaisseaux de très petit diamètre car les bords des vaisseaux ne sont pas nécessairement des lignes ou surfaces isointensité d'où Il résulte que certaines parties de ces bords pourraient tomber sous le seuil choisi et être éliminées, ce qui risquerait de modifier d'une part les dimensions et d'autre part les formes des vaisseaux dans l'image 3-D reconstruite.

La présente invention propose un procédé de segmentation 100 qui permet d'obtenir une reconstruction avantageuse de l'image 3-D où :

tous les vaisseaux sont séparés du fond et sont conservés avec leur propre intensité dans la même image 3-D, quels que soient leurs différents niveaux d'intensité vis-à-vis du fond, dans l'image à segmenter, ce qui est très important pour établir un diagnostic médical d'insuffisance vasculaire,
les dimensions, en particulier les diamètres, et les formes des vaisseaux sont reproduites de manière très fidèle, ce qui est très important pour établir un diagnostic médical de présence d'anomalies du diamètre telles que les sténoses et d'anomalies des formes telles que les anévrismes.

En outre, le procédé de segmentation 100 proposé selon l'invention nécessite un temps de calcul beaucoup plus court que le procédé déjà connu. Par exemple, le procédé de segmentation avec reconstruction d'image 3-D selon l'invention peut être mis en oeuvre en utilisant des machines SPARC ou ULTRASPARC, connues à ce jour de l'homme du métier, qui réalisent les calculs nécessaires à la reconstruction d'une image 3-D segmentée de $128^3$ voxels en environ 1 min.

En référence à la FIG.1B, ce procédé de segmentation 100 comprend deux étapes générales :

une opération de pré-segmentation 30 qui consiste à déterminer, dans cette image 3-D, une pluralité de cellules élémentaires, non géométriques, définies par une première condition qui exclut qu'une cellule élémentaire contient ou coupe un vaisseau ou un bord de vaisseau et par une seconde condition qui inclut qu'une cellule élémentaire contient uniquement des voxels d'intensités substantiellement identiques,
une opération de segmentation proprement dite 40 dans laquelle des paires de cellules élémentaires adjacentes de l'image pré-segmentée sont combinées par une méthode de fusion (en anglais : merging) pour former des cellules résultantes, en conservant la première condition qu'une cellule résultante ne contient ni ne coupe aucun vaisseau ou bord de vaisseau et la seconde condition qu'une cellule élémentaire ne contient que des voxels d'intensités substantiellement proches, et l'opération de fusion est poursuivie jusqu'à ce que l'image contienne un nombre de cellules diminué par rapport à l'image pré-segmentée, ce nombre étant choisi nécessaire et suffisant pour séparer les vaisseaux les uns des autres et du fond.

En référence à la FIG.1B, ces étapes sont suivies d'une troisième étape générale 60 dans laquelle, en référence à la FIG.7C, une image 3-D optimisée est reconstruite, par exemple par une méthode de rendu de surfaces volumiques, représentant tous les vaisseaux avec leurs différentes intensités, leurs dimensions et formes fidèlement reproduites, sur un fond uniforme.

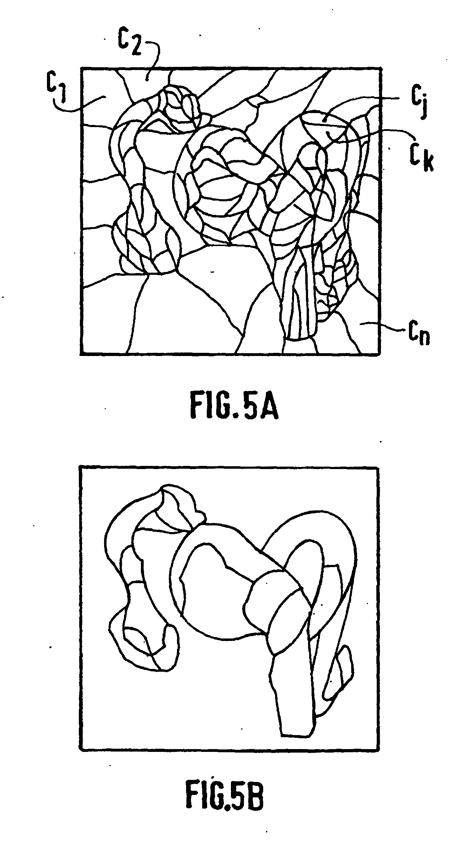

En référence à la FIG.2, l'étape 30 de pré-segmentation comprend une détermination, dans une image 3-D dé-bruitée issue de l'étape 14, de cellules élémentaires illustrées par la FIG.5A, sans forme prédéterminée, répondant à la première condition précédemment définie qu'aucune cellule élémentaire ne contient ni ne coupe de vaisseaux ou bords de vaisseaux et à la seconde condition d'uniformité d'intensité. Un problème essentiel consiste donc à localiser les positions exactes des parois des vaisseaux.

Dans le cas de données parfaites exhaustives et non bruitées, le module du gradient d'intensité, évalué dans une image 2-D ou 3-D, est différent de zéro (0), si ce gradient d'intensité est évalué dans le voisinage d'une paroi d'un vaisseau. Cette propriété peut aider à résoudre le problème de localisation des parois des vaisseaux. Cependant, la solution à ce problème n'est pas simple, car, dans le cas d'une image 3-D, une paroi de vaisseau est définie comme un ensemble de voxels où le module du gradient atteint un maximum local le long de sa propre direction.

En référence à la FIG.2, une solution appropriée pour résoudre ce problème et pour effectuer la pré-segmentation 30 comprend une méthode particulière de classification des voxels Incluant une transformation de l'image 3-D en image paysage.

Lorsque l'on a affaire à une image plane ou 2-D, il est facile de représenter cette image comme un paysage à 3 dimensions spatiales, dont les deux premières dimensions spatiales x, y, sont celles de l'image plane 2-D et dont la troisième dimension spatiale est constituée par l'intensité I(x, y) des pixels formant des reliefs. Par analogie, on peut également construire un tel paysage en partant d'une image volumique 3-D où une fonction de l'intensité devient une quatrième dimension spatiale pour former des reliefs. Dans une image 3-D, ce sont les modules des gradients qui forment des surfaces d'une image paysage que l'on peut se représenter et ce sont les variations des modules des gradients qui forment les reliefs, vallées CB ou crêtes WS de cette image paysage. La FIG.4A illustre un tel paysage 3-D, en coupe selon l'axe des x. Ce paysage comprend par exemple une montagne M avec une crête WS, et des vallées CB où se recueille l'eau de pluie coulant le long des versants de la montagne M, de part et d'autre de la ligne de crête WS qui est la ligne de partage des eaux. Chaque vallée CB de part et d'autre de la crête WS est un bassin hydrographique appelé bassin-versant On détermine des bassins-versants CB, comme des classe indépendantes et on définit une méthode de classification des voxels de l'image par laquelle deux voxels appartiennent à une même classe, c'est-à-dire à un même bassin versant CB, si des gouttes d'eau fictives qui tombent en ces voxels sur une surface de l'image paysage atteignent le même minimum de ladite surface.

Par cette méthode de classification, les voxels qui sont en dehors de tout bassin versant, c'est-à-dire en dehors de toute classe, sont sur les lignes de partage des eaux WS, donc sur les frontières des classes définies par les bassins-versants. On décide ensuite que les cellules élémentaires C de l'image pré-segmentée JPS montrée sur la FIG.5A sont identifiées avec les bassins-versants CB.

En référence à la FIG.2, en pratique, cette étape 30 de pré-segmentation comprend des sous-étapes de :

détermination 31, en chaque voxel, du module du gradient $\|\vec{G}\|$, d'un vecteur gradient $\vec{J}$ de ce module de gradient $\|\vec{G}\|$, et de son module $\|\vec{J}\|$

détermination 32 d'une dasse des bassins-versants CB effectuée en suivant, en chaque voxel, la direction des vecteurs gradients $\vec{J}$ des gradients $\|\vec{G}\|$ jusqu'à un minimum local Min $\|\vec{G}\|$ du module du gradient $\|\vec{G}\|$; l'ensemble des voxels qui convergent vers un même minimum local Min $\|\vec{G}\|$ de module du gradient $\|\vec{G}\|$ sont regroupés comme appartenant au même bassin-versant CB,

détermination 33 d'une dasse des lignes de partages des eaux WS : les voxels dont les modules du gradient de gradient $\|\vec{J}\|$ s'annulent sans correspondre à des minima locaux Min $\|\vec{G}\|$, et qui ne peuvent être affectés à aucun bassin-versant CB, sont donc affectés aux lignes de partages des eaux WS,

numérotation 34 des bassins-versants CB de 1 à n, notés $CB_1$-$CB_n$,

répartition 35 des voxels des lignes de partage des eaux WS dans les bassins-versants CB les plus proches de sorte qu'il n'existe plus de lignes frontières formées de voxels, mais à la place on trouve des interfaces de bassins-versants, notées BD, qui passent entre des couples de voxels notés VBD formés d'un voxel dans chacun des bassins-versants adjacents ; comme illustré par les FIG.4B, 4C, les voxels des lignes de partage des eaux WS sont simplement attribués lors de balayages alternatifs SCN aux bassins-versants situés de part et d'autre l'interface BD,

décision 36 que les bassins-versants résultants comportant les voxels des bassins-versants CB plus les voxels répartis des lignes de partage des eaux WS sont les cellules élémentaires recherchées, ayant les numéros 1 à n attribués aux bassins-versants.

De l'utilisation de cette méthode de classification des voxels et d'identification des cellules élémentaires aux bassins-versants, il résulte que ni les parois des vaisseaux ni les vaisseaux ne peuvent traverser les classes des cellules ou bassins-versants CB, puisque les parois des vaisseaux sont aux frontières des classes, c'est-à-dire en coïncidence avec les crêtes WS et il en résulte que les vaisseaux forment eux-mêmes des classes indépendantes. Il résulte aussi que ces parois de vaisseaux peuvent être détectées avec la précision de détection des lignes de partage des eaux. Cette méthode de classification et d'identification répond donc bien aux deux conditions imposées dans l'étape de pré-segmentation.

En référence à la FIG.5A, l'image est maintenant formée de cellules élémentaires numérotées $C_1,...C_i,...C_n$ ne franchissant et ne contenant aucun vaisseau.

Après l'étape de pré-segmentation 30, le nombre 1 à n des cellules élémentaires est trop grand pour reconstruire une image 3-D par rendu de surfaces volumiques avec profit. On applique maintenant, en référence aux FIGs 1B, 3A, 3B, une étape de segmentation 40 proprement dite. Cette segmentation 40 est obtenue par l'application sur l'image pré-segmentée d'un algorithme de fusion pour minimiser le nombre d'interfaces en réunissant ensemble des cellules adjacentes ayant des propriétés de similarité. Cette similarité est mesurée par une fonction de coût, notée F, qui comprend une somme de deux termes. Dans une forme générale, la fonction de coût s'écrit :

$$F = \sum_{C_i} f_1\left[\sigma^2(C_i)\right] + \lambda \sum_{VBD} f_2\left(\|\vec{G}\|\right) \qquad (1)$$

et en particulier :

$$F = \sum_{C_i} m_i\sigma^2(C_i) + \lambda \sum_{VBD} 1/\left[1 + \left(\|\vec{G}\|/\|\vec{G}_0\|\right)^2\right] \qquad (2a)$$

Une fusion peut être effectuée entre deux cellules adjacentes, si et seulement si cette fusion résulte en ce que la fonction de coût F est minimisée. Les termes de la fonction de coût constituent des critères pour réduire le nombre des cellules par fusion sous les conditions que l'intensité des voxels à l'Intérieur des cellules fusionnées est substantiellement uniforme, et qu'aucune cellule résultant de la fusion ne contient ou traverse des vaisseaux.

Le premier terme est un critère qui prend en compte les différences d'intensité des cellules résultant de la pré-segmentation, et qui est constitué par une fonction de sommation d'une fonction $f_1 \llcorner m_i\sigma^2(C_i)\lrcorner$ des variances notées $\sigma^2(C_i)$ des intensités dans les différentes cellules $C_i$ où les variances sont multipliées par le nombre $m_i$ des

voxels dans la cellule $C_i$ considérée. La variance $\sigma^2(C_i)$ est calculée dans chacune des cellules en prenant la valeur moyenne du carré de l'écart type d'intensité par rapport à la moyenne d'intensité dans la cellule. Pour évaluer facilement le premier critère, l'intensité interne aux cellules est rendue substantiellement uniforme en calculant individuellement la moyenne d'intensité $I_i^{MOY}$ dans chaque cellule de l'image pré-segmentée et en attribuant cette moyenne d'intensité à chacun des voxels de la cellule considérée. La fonction de coût peut alors être écrite de façon équivalente :

$$F = \sum_{C_i} \left[ I(x,y) - I_i^{MOY} \right]^2 + \lambda \sum_{VBD} 1/\left[ 1 + \left( \|G\|/\|G_0\| \right)^2 \right] \qquad (2b)$$

où la fonction de la variance $f_1(\sigma^2)$ dans le premier terme est la fonction de sommation des carrés des différences entre l'intensité $I(x, y)$ d'un voxel de coordonnées x, y et l'intensité moyenne $I_i^{MOY}$ de la cellule $C_i$ à laquelle ce voxel appartient. On rappelle que, dans tous les cas, lors d'une fusion, la variance d'intensité de la cellule résultant de la fusion est toujours supérieure à la somme des variances d'intensité des cellules avant fusion (loi statistique). Donc ce critère défavorise toute fusion mais il est contrebalancé par le second terme.

Le second terme est un critère qui est pondéré par un facteur de pondération $\lambda$, et qui est constitué par une fonction de sommation, sur tous les couples de voxels situés à l'interface des cellules, d'une mesure spécifique notée $f_2(\|G\|)$ prenant en compte le module du gradient $\|G\|$ en chacun des voxels de ces couples à l'interface, où $\|G_0\|$ est un facteur de normalisation. On effectue, dans le second critère, sur les couples de voxels VBD, situés de part et d'autre d'une interface BD, dans les cellules adjacentes la somme

$$\sum_{VBD} f_2(\|G\|)$$

prenant en compte des modules de gradients $\|G\|$ déjà calculés.

Pour une valeur donnée fixée du facteur de pondération $\lambda$, ce second critère constitue une pénalité qui est d'autant plus forte que les modules des gradients des voxels d'interface entre deux cellules sont faibles. Ce second critère incite donc à fusionner les cellules dont les interfaces montrent des modules du gradient faibles, car, par cette fusion, le terme de pénalité est minimisé d'où il résulte que la fonction de coût F tend vers une minimisation, même en tenant compte d'une augmentation de la variance d'intensité due à la fusion. En revanche, ce second critère apporte une pénalité faible ou nulle lorsque les voxels d'interface de deux cellules adjacentes montrent des modules du gradient forts, ce qui n'incite pas à fusionner ces cellules, compte tenu du fait que la variance d'intensité qui augmente lors de la fusion empêche de minimiser la fonction de coût F. Ceci permet donc de préserver la séparation des classes vaisseaux et des classes fond, puisque l'on sait que le module du gradient a une valeur forte sur les bords des vaisseaux.

Ce type de fonction de coût pour effectuer des fusions n'était pas connu de la publication citée au titre d'état de la technique. Selon l'invention la première étape de pré-segmentation détermine, grâce aux lignes de partages des eaux WS, des interfaces BD de localisations très précises. La seconde étape de segmentation sélectionne, grâce à la fonction de coût F spécifique, d'une part les parties des interfaces BD qui sont réellement des bords de vaisseaux ayant une localisation précise, et d'autre part les différentes parties de vaisseaux qui constituent chacune une dasse à part entière bien délimitée des dasses formant le fond par les interfaces BD qui coïncident avec les bords des vaisseaux. C'est pour cette raison qu'aucune dasse ne peut couper un vaisseau et qu'aucun bord de vaisseau ne peut être éliminé lors d'une fusion.

Dans l'étape de segmentation 40 proprement dite, on opère des fusions de cellules adjacentes deux à deux lorsque les voxels de ces cellules présentent des caractéristiques prises en compte par les deux critères, et qui sont telles que la fonction de coût F est minimisée par la fusion. Si la fonction de coût F n'est pas minimisée mais au contraire croît par la fusion, cette fusion n'est pas opérée.

Il faut noter que le second critère de la fonction de coût F est en outre pondéré par un facteur de pondération variable $\lambda$. Pour mettre en oeuvre l'opération de segmentation 40 au moyen de la fonction de coût F, on fait croître le paramètre $\lambda$ graduellement depuis une valeur de départ, notée $\lambda_0$. Si par exemple, la valeur $\lambda_0$ est prise égal à zéro, alors il ne reste que le premier terme dans la fonction F, et il est tout à fait clair qu'il n'y a aucun intérêt à fusionner deux cellules, car la variance d'une cellule fusionnée est toujours plus grande que la somme des variances de deux cellules individuelles (loi statistique).

Pour $\lambda_0 \neq 0$, les cellules ayant été préalablement numérotées, on visite toutes les cellules $C_1$ à $C_n$ qui sont adjacentes et qui forment donc des paires. Pour chaque paire, la fonction F opère une compétition entre le premier terme relatif à la variance et le second terme relatif à l'inverse du module du gradient des voxels d'interface, pondéré par le facteur $\lambda$. Comme on l'a vu précédemment le premier terme relatif à la variance augmente en cas de fusion, alors que le second terme diminue du fait que l'interface des cellules fusionnées est supprimée, ces cellules n'en faisant plus qu'une, et donc que le nombre de voxels sur lequel le second terme doit être calculé diminue. Pour une paire de cellules adjacentes données, la compétition entre le premier et le second termes de la fonction de coût F peut résulter en une minimisation de la fonction de coût F et donc en une fusion des cellules de cette paire, en prenant en compte non seulement la fonction de variance d'intensité et la fonction des modules des gradients mais aussi la valeur variable du paramètre $\lambda$ de pondération du second terme. Pour un nombre donné de cellules issues de la pré-segmentation, le premier terme de la fonction de coût F est fixé, et donc plus la valeur de $\lambda$ est faible, moins il y a de possibilité de minimiser la fonction de coût F et de fusionner des cellules, alors que plus la valeur de $\lambda$ est grande, plus il y a de possibilité de minimiser la fonction F et de fusionner des cellules.

Après chaque fusion, l'intensité de la cellule résultante est calculée comme la moyenne des intensités des voxels des deux cellules fusionnées et les couples de voxels d'interface des deux cellules fusionnées deviennent des voxels internes ordinaires.

Il faut maintenant rappeler qu'un des buts de invention est de réaliser les opérations de segmentation en un temps plus court que ce qui est actuellement connu de l'état de la technique. C'est pourquoi, l'étape 40 de segmentation proprement dite qui utilise la fonction de coût F est mise en oeuvre en utilisant des sous-étapes spécifiques décrites plus loin qui incluent, pour alléger le temps de calcul, la construction d'un premier histogramme simple à partir de l'évaluation des seuils de fusion de couples de deux cellules adjacentes pour fournir le nombre de couples de cellules qui fusionnent pour un même seuil de fusion donné ; et la construction d'un second histogramme appelé histogramme cumulé, à partir du premier histogramme simple, pour fournir le nombre de couples de cellules qui fusionnent pour un seuil de fusion inférieur ou égal à un seuil particulier. Purement à titre d'exemple, pour illustrer cette description, on suppose qu'à l'issue de la pré-segmentation 30, on a obtenu 20.000 classes avec 50.000 interfaces dans l'image 3-D pré-segmentée.

Théoriquement, la segmentation 40 devrait comporter les sous-étapes suivantes :

évaluation de la fonction de coût F avant toute fusion, alors notée $F_0$ : dans le premier terme de $F_0$, la fonction de sommation est calculée sur les 20 000 cellules issues de la pré-segmentation, et dans le second terme, la fonction de sommation est calculée sur les 50 000 interfaces,

sélection pour examen d'un couple de deux cellules $C_j$, $C_k$,

évaluation de la fonction de coût F après la fusion des deux cellules de ce couple, la fonction de coût étant alors notée $F_1$, : dans le premier terme de $F_1$, la somme est effectuée sur les 20 000 cellules moins une, et dans le second terme, la somme est effectuée sur les 50 000 interfaces moins une,

détermination d'un seuil de fusion $\lambda_0$ ($j$, $k$) à partir du paramètre de pondération $\lambda$ qui constitue le seuil auquel l'interface entre les deux cellules du couple examiné disparaît et qui permet la fusion des deux cellules du couple examiné, cette fusion résultant en la fonction de coût $F_1$ : on définit $\lambda_0$ ($j$, $k$) comme la valeur qui permet d'annuler une fonction $E_0$ calculée comme la différence entre les fonctions de coût $F_1$ et $F_0$, dans lesquelles le paramètre de pondération est $\lambda_0$ ($j$, $k$), et on écrit :

$$E_0 = F_1 - F_0 = 0 \text{ avec } \lambda = \lambda_0 (j,k) \tag{3}$$

Il en résulte que $\lambda_0$ ($j$, $k$) est aisément calculé pour deux cellules particulières $C_j$, $C_k$ avec :

$$\lambda_0(j,k) = m_j m_k \left( I_j^{MOY} - I_k^{MOY} \right)^2 / (m_j + m_k) \sum_{VBD} 1 / \left[ 1 + (\|G\|) / \|G_0\| \right] \tag{4}$$

où $I_j^{MOY}$ et $I_k^{MOY}$ sont les valeurs moyennes d'intensité et $m_j$, $m_k$ les nombres de voxels dans les cellules.

Dans la pratique, l'étape 40 de segmentation proprement dite ne comprend pas l'évaluation d'une fonction de coût F telle que celle des formules (1) ou (2) car ce calcul est trop long. L'étape 40 de segmentation est fondée sur l'évaluation du seuil de fusion $\lambda_0$ ($j$, $k$) et comprend les sous-étapes suivantes :

détermination 41 des couples de cellules adjacentes $C_j$, $C_k$ dans l'image pré-segmentée ; il y a autant d'interfaces $BD_{jk}$ que de couples,

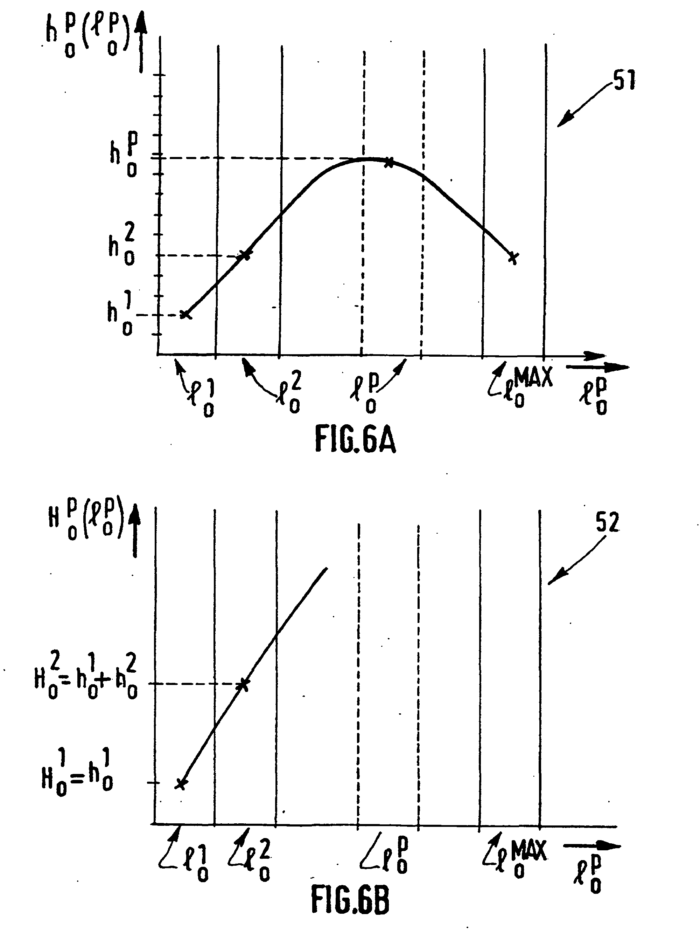

détermination 42 des intensités moyennes $I_j^{MOY}$, $I_k^{MOY}$ et des nombres $m_j$, $m_k$ de voxels des cellules adjacentes $C_j$, $C_k$ des couples,

détermination 43 d'autant de seuils de fusion $\lambda_0$ ($j$, $k$) qu'il y a de couples de cellules adjacentes $C_j$, $C_k$, en utilisant

la formule (4),

classification 44 des seuils $\lambda_0$ $(j, k)$, du plus petit au plus grand, que l'on note $\lambda_0^I$ à $\lambda_0^{MAX}$,

construction d'un premier diagramme 51, noté $h_0^p$ illustré par la FIG.6A, appelé histogramme simple, basé sur le fait que, en pratique, un certain nombre de couples de cellules montrent, dans l'évaluation de la fonction de coût F, le même premier terme et le même second terme, d'où il résulte que les cellules de ces couples peuvent fusionner pour le même seuil : On porte en abscisse les valeurs des seuils $\lambda_0^I$ à $\lambda_0^{MAX}$ qui sont des nombres pouvant théoriquement être compris entre 1 et 50.000, s'il y a 50.000 interfaces, et on porte en ordonnée le nombre d'occurrence $h_p$, c'est-à-dire le nombre $h_p$ de fois où l'on trouve des interfaces qui fournissent $E_0 = 0$ avec $\lambda_0^p$ de $\lambda_0^1$ à $\lambda_0^{MAX}$ où $1 \leq p \leq MAX$. On a noté $h_1$ le nombre de couples fusibles possibles avec $\lambda_0^1$, $h_p$ le nombre de couples fusibles possibles avec $\lambda_0^p$ et $h_{MAX}$ le nombre de couples fusibles possibles avec $\lambda_0^{MAX}$; le nombre $h_{MAX}$ qui correspond à $\lambda_0^{MAX}$ n'est pas obligatoirement grand ; il n'est pas exclu que $h_{MAX} = 0$ ; et il apparaît que, pour certaines valeurs de $\lambda_0^p$, on ne trouve aucune fusion possible ($h_p = 0$) alors que pour d'autres valeurs de $\lambda_0^p$, on trouve un nombre $h_p$ important de couples fusibles possibles. Donc, lors de la construction de l'histogramme simple, il peut y avoir plusieurs milliers de valeurs de $\lambda_0^p$ en abscisse ; afin de rendre les calculs simples et rapides, les valeurs de $\lambda_0^p$ sont regroupées par tranches de par exemple 256 valeurs et ce sont ces tranches qui sont en fait portées en abscisse dans cet histogramme simple 51 : ainsi les valeurs $\lambda_0^1$ à $\lambda_0^{255}$ sont regroupées dans une tranche notée $\ell_0^1$, les valeurs $\lambda_0^{256}$ à $\lambda_0^{511}$ sont regroupées dans une tranche notée $\ell_0^2$, et ainsi de suite, jusqu'à une dernière tranche notée $\ell_0^{max}$; dans chaque tranche les nombres d'occurrences $h_p$ sont additionnées et notées par analogie $h_0^1$ à $h_0^{max}$; ce sont alors en fait les valeurs $h_0^p$ qui sont portées en ordonnée dans cet histogramme simple 51,

construction 52 d'un second diagramme, noté $H_0^p$ appelé histogramme cumulé, illustré par la FIG.6B, basé sur l'histogramme simple, dans lequel on remet en abscisse les tranches déterminées dans l'histogramme simple 51, de $\ell_0^1$ à $\ell_0^{max}$, et dans lequel on met en ordonnée les valeurs cumulées dans chaque tranche des $h_0^1$ à $h_0^{max}$, c'est-à-dire les nombres d'occurrences additionnés depuis la première tranche jusqu'à une tranche considérée : ainsi, dans la tranche $\ell_0^1$, on porte un nombre d'occurrences $h_0^1$ maintenant noté $H_0^1$; dans la tranche $\ell_0^2$, on porte un nombre d'occurrences $h_0^1 + h_0^2$ noté $H_0^2$; et ainsi de suite jusqu'à la tranche $\ell_0^{max}$ où est porté un nombre d'occurrences égal à la somme des $h_0^1$ à $h_0^{max}$ notée $H_0^{max}$,

segmentation sélective 53 de l'image 3-D : à partir de l'histogramme cumulé 52 : pour opérer une segmentation de l'image 3-D avec une grande rapidité, on choisit par exemple de mener à bien la segmentation par étapes où, à chaque étape, on réalise un nombre donné de fusions concomitantes pour éliminer d'un coup un pourcentage donné d'interfaces, par exemple 10 % ou 15 % des interfaces; à cet effet dans l'histogramme cumulé 52, on choisit une tranche $\ell_0^p$ qui contient le nombre d'occurrences voulu ; cette valeur de $\ell_0^p$ annule la fonction $E_0$ définie plus haut, et donc minimise la fonction de coût F pour tous les couples de cellules qui ont produit un seuil de fusion $\lambda_0$ $(j,k)$ dans cette tranche ; on visite tous les couples de cellules adjacentes et on fusionne les cellules chaque fois qu'elles correspondent à un seuil de fusion $\lambda_0(j,k)$ inférieur au seuil prédéterminé $\ell_0^p$ ce qui permet d'opérer les fusions de ces couples de façon concomitante avec une première élimination du nombre voulu d'interfaces; puis on réorganise les cellules restantes en calculant l'intensité des cellules résultantes comme la moyenne des intensités des cellules d'origine ; on recalcule pour les cellules résultantes les termes de la relation (4), car les rapports entre les cellules restantes ne sont plus les mêmes qu'entre les cellules initiales ; on remet à jour l'histogramme simple 51 et l'histogramme cumulé 52 et on recommence à choisir la tranche $\ell_0^p$ qui contient le nombre d'occurrences voulu pour faire fusionner un nouveau pourcentage de 10 ou 15 % par exemple de couples de cellules; on opère ainsi jusqu'à ce qu'on ait obtenu un nombre approprié de cellules ; on peut choisir de garder par exemple 10 ou 15% des cellules initiales : dans les cellules restantes les voxels d'interfaces éliminés sont des voxels internes ordinaires et les intensités sont les intensités moyennes des cellules adjacentes fusionnées.

En référence à la FIG.1B et à la FIG.7C, l'image 3-D segmentée peut alors subir une opération 60 de reconstruction avec rendu des surfaces volumiques pour être affichée ou enregistrée. Les vaisseaux sont reproduits, grâce à la segmentation selon l'invention, chacun avec un niveau d'intensité spécifique qui permet de les distinguer les uns des autres et du fond.

En référence à la FIG.8, un appareil de radiographie numérisée comprend une source 1 de rayons X, une table 2 pour recevoir le patient, un dispositif 3 intensificateur d'image couplé à un tube video 4, qui fournit des données à un système 5 de traitement numérique d'image comprenant un processeur pour mettre en oeuvre le procédé de traitement d'image selon l'invention. Ce processeur comprend plusieurs sorties dont une sortie 6 couplée à un moniteur 7 pour visualiser des images radiographiques, ou à un système enregistreur approprié 8. Le système de traitement d'image peut faire partie intégrante de l'appareil à rayons X ou bien en être éloigné tout en étant couplé.

D'une manière générale, le procédé de traitement d'image précédemment décrit peut être exploité partiellement ou entièrement par tout système d'imagerie médicale, et en particulier appliqué à des appareils à rayons X tels que décrits plus haut pour le traitement d'image multidimensionnelle, avec ou sans reconstruction des surfaces volumiques.

**Revendications**

1. Procédé de traitement d'une image multidimensionnelle, formée de points, représentant des objets d'intensité différente d'un objet à l'autre, limités par leurs bords vis-à-vis d'un fond, ce procédé incluant des étapes de segmentation (100; 30, 40) de l'image comprenant:

   une étape de pré-segmentation, incluant une classification des points de l'image dans différentes cellules élémentaires avec un critère, qui est une fonction des gradients d'intensité ($\|G\|$) de ces points, qui détermine des cellules élémentaires d'intensité respectivement uniforme et qui exclut les cellules qui traversent ou englobent un bord; et
   une étape de segmentation proprement dite de l'image, comprenant la combinaison de cellules adjacentes par paires, avec un critère de fusion qui met en compétition un premier critère qui défavorise la fusion d'une paire de cellules d'intensités différentes et un second critère qui favorise la fusion d'une paire de cellules si la cellule résultante ne traverse pas ou n'englobe pas un bord.

2. Procédé selon la revendication 1, comprenant dans l'étape de segmentation proprement dite, la réduction du premier nombre des cellules en classant les cellules par couples de cellules adjacentes (Cj, Ck), en évaluant un seuil de fusion $\lambda_0$ (j, k) des cellules des couples comme une fonction de la variance d'intensité ($\sigma^2$) et des gradients d'intensité $\|G\|$ dans les cellules de chaque couple, en évaluant un seuil de fusion particulier ($\ell_0^p$) en dessous duquel des cellules adjacentes de couples fusionnent en nombre prédéterminé (H$_0$(p)) et en effectuant la fusion concomitante des cellules adjacentes des couples ayant des caractéristiques d'intensité qui conduisent à un seuil de fusion inférieur au seuil particulier.

3. Procédé selon la revendication 2, où dans l'étape de pré-segmentation (30), la détermination des cellules élémentaires est effectuée en transformant l'image multidimensionnelle en une image paysage par des fonctions des gradients d'intensité des points de l'image, en identifiant (Ci) les cellules recherchées à des bassins-versants (CB) et en identifiant les bords délimitant lesdites cellules à des lignes de partage des eaux (WS)de l'image paysage.

4. Procédé selon la revendication 3, où les points des lignes de partages des eaux (WS) sont versés dans les bassins versants (CB) adjacents situés de part et d'autre de ces lignes, où les cellules reçoivent une intensité uniforme calculée comme la moyenne ($I_i^{MOY}$) d'intensité des points à l'intérieur des bassins versants et forment une classe objets, et où des interfaces (BD) sont définies entre des couples de points de bords (VBD) des couples de cellules adjacentes et coïncident avec des bords d'objets.

5. Procédé selon la revendication 2, ou selon l'une des revendications 3 ou 4, où, dans l'étape de segmentation proprement dite,

   on définit une fonction de coût (F) comprenant un premier terme qui est une fonction de la variance d'intensité ($\sigma^2$) à l'intérieur des cellules présentes dans l'image, et un second terme qui est pondéré par un facteur de pondération variable ($\lambda$) et qui est une fonction des gradients d'intensité aux points de bord des cellules,
   et on évalue le seuil de fusion ($\lambda_0$(j,k)) pour effectuer la fusion de deux cellules adjacentes (C$_j$, C$_k$) d'un couple comme la valeur du facteur de pondération variable ($\lambda$) qui annule la différence (E$_0$) entre la fonction de coût (F$_0$) calculée avant la fusion des deux cellules et la fonction de coût (F$_1$) calculée après cette fusion.

6. Procédé selon la revendication 5, où la fonction de coût est donnée par la formule :

$$F = \sum_{C_i}\left[I(x,y) - I_i^{MOY}\right]^2 + \lambda \sum_{VBD} 1/\left[1 + \left(\|G\|/\|G_0\|\right)^2\right],$$

dans laquelle le premier terme est la fonction de variance d'intensité exprimée par une première fonction de sommation, sur toutes les cellules (C$_i$), des carrés des différences entre l'intensité I(x, y) d'un voxel de coordonnées (x, y) et l'intensité moyenne ($I_i^{MOY}$) dans les cellules (C$_i$) à laquelle ce voxel appartient, et dans laquelle le second terme est pondéré par le facteur de pondération ($\lambda$), et est constitué par une seconde fonction de sommation, sur tous les couples de voxels situés à l'interface des cellules, d'une mesure spécifique prenant en compte le module du gradient normalisé ($\|G\| / \|G_0\|$) des voxels de ces couples d'interface,
et où le seuil de fusion ($\lambda_0$(j, k) ) qui permet de réaliser la fusion de deux cellules (C$_j$, C$_k$) adjacentes entre elles, est évalué comme une fonction des différences des intensité moyennes ($I_j^{MOY} I_k^{MOY}$) des deux cellules à fusionner et du nombre de points ($m_j$, $m_k$) dans ces cellules, et de la seconde fonction de sommation, selon une formule :

$$\lambda_0(j,k) = m_j m_k \left( I_j^{MOY} - I_k^{MOY} \right)^2 / (m_j + m_k) \sum_{VBD} 1/\left[1 + (\|G\|)/\|G_0\|\right]$$

**7.** Procédé selon l'une des revendications 5 ou 6, où on évalue le seuil de fusion particulier ($\ell_0^p$) qui permet de réaliser concomitamment plusieurs fusions de chacune deux cellules adjacentes ($C_j$, $C_k$) entre elles, par une suite d'étapes comprenant :

une détermination des seuils des fusion ($\lambda_0(j, k)$) des cellules de tous les couples de l'image,
une classification de ces valeurs ($\lambda_0(j,k)$) du seuil de fusion par valeurs croissantes ($\lambda_0^p$), ces valeurs étant en nombre au plus égal au nombre total des interfaces présentes dans l'image pré-segmentée ($1 \le \lambda_0^p \le \lambda_0^{MAX}$),
une détermination de tranches ($\ell_0^p$) de ces valeurs des facteurs de seuil de fusion ($\lambda_0^p$), classées par valeurs croissantes,
une construction d'un histogramme simple (51) du nombre ($h_0^p$) d'occurrences de fusions de cellules adjacentes respectivement dans chaque tranche ($\ell_0^p$) des valeurs de seuil de fusion ($\lambda_0(j, k)$),
une construction d'un histogramme cumulé (52) en inscrivant dans chaque tranche ($\ell_0^p$) la somme cumulée ($H_0^p$) du nombre desdites occurrences ($h_0^p$) depuis la première tranche ($\ell_0^l$) jusqu'à une tranche considérée ($\ell_0^p$), et ce dans toutes les tranches ($\ell_0^l$-$\ell_0^{MAX}$) des valeurs de seuil de fusion ($\lambda_0^p$),
et une définition du dit seuil de fusion particulier comme la tranche ($\ell_0^p$) qui comprend le nombre d'occurrences ($H_0^p$) correspondant au nombre prédéterminé de fusions concomitantes recherché.

**8.** Procédé selon la revendication 7, où, à la suite de la détermination du seuil particulier, on sélectionne un nombre prédéterminé d'interfaces à éliminer de façon concomitante entre des cellules adjacentes de couples, on effectue une visite des couples de cellules adjacentes de l'image, et on procède à une fusion des cellules adjacentes des couples chaque fois que le seuil de fusion relatif à ces cellules ($\lambda_0(j, k)$ est inférieur au dit seuil de fusion particulier ($\ell_0^p$).

**9.** Procédé selon l'une des revendications précédentes comprenant préalablement à l'étape de segmentation des étapes d'acquisition d'images d'intensité bidimensionnelle (2-D) d'un volume, et de reconstruction d'une image tridimensionnelle bruitée (3-D), et comprenant, ultérieurement à l'étape de segmentation de l'image tridimensionnelle en cellules objets et cellules fond, des étapes de reconstruction d'une image tridimensionnelle par une méthode mettant en oeuvre des rendus de volumes où chaque objet se voit attribuer respectivement l'intensité individuelle de la cellule correspondante.

**10.** Procédé selon l'une des revendications précédentes où l'image multidimensionnelle est une image médicale vasculaire.

**11.** Appareil d'imagerie médicale comprenant un système d'acquisition d'une d'image, et un système de traitement d'image qui a accès aux données de l'image et à un système d'affichage de l'image et qui comprend un processeur mettant en oeuvre un procédé de traitement d'image selon l'une des revendications 1 à 10.

**12.** Appareil à rayons X comprenant un appareil d'imagerie médicale selon la revendication 11.

**Patentansprüche**

**1.** Multidimensionales Bildverarbeitungsverfahren gebildet aus Punkten bezeichnend für Objekte verschiedener Intensitäten von einem Objekt zum anderen, begrenzt durch ihre Ränder hinsichtlich des Hintergrunds, wobei dieses Verfahren Bildsegmentationsstufen (100; 30, 40) aufweist mit:

einem Schritt der Vor-Segmentation mit einer Klassifizierung der Bildpunkte in den verschiedenen elementaren Zellen mit einem Kriterium, welches eine Funktion der Intensitätsgradienten ($\|G\|$) dieser Punkte ist, welche elementare Zellen respektive einheitlicher Intensität ermittelt und diejenigen Zellen ausschließt, welche einen Rand überqueren oder einschließen; und
einem eigentlichen Segmentationsschritt mit der Kombination paarweise angrenzender Zellen und einem Zusammenschlusskriterium, welches einen Wettbewerb zwischen einem ersten Kriterium, das den Zusammenschluss eines Zellenpaares mit verschiedenen Intensitäten benachteiligt und einem zweiten Kriterium, das den Zusammenschluss eines Zellenpaares begünstigt, wenn die entstehende Zelle keinen Rand überquert oder einschließt, veranstaltet.

2. Verfahren nach Anspruch 1 mit auf der eigentlichen Segmentationsstufe die Reduzierung der ersten Anzahl an Zellen mit der Klassifizierung der Zellen nach Paaren angrenzender Zellen (Cj, Ck), indem eine Zusammenschlussschwelle $\lambda_0$ (j, k) der Zellen der Paare als Funktion der Intensitätsvarianz ($\sigma^2$) und der Intensitätsgradienten ‖G‖ in den Zellen jedes Paares bewertet wird, indem man eine besondere Zusammenschlussschwelle ($I_0^p$) bewertet, unter der die angrenzenden Zellen der Paare in vorbestimmter Anzahl ($H_0(p)$) zusammengeschlossen werden, und indem der gleichzeitige Zusammenschluss der angrenzenden Zellen derjenigen Paare ausgeführt wird, welche an eine unter der besonderen Schwelle liegende Zusammenschlussschwelle reichen.

3. Verfahren nach Anspruch 2, wobei auf der Vor-Segmentationsstufe (30) die Bestimmung der elementaren Zellen ausgeführt wird, indem das multidimensionale Bild mit Funktionen der Intensitätsgradienten der Bildpunkte in ein Landschaftsbild gewandelt wird, indem man die gesuchten Zellen an den Staubecken (CB) identifiziert (Ci) und indem man die die besagten Zellen eingrenzenden Ränder an den Wasserscheidelinien (WS) des Landschaftsbildes identifiziert.

4. Verfahren nach Anspruch 3, wobei die Punkte der Wasserscheidelinien (WS) in die angrenzenden Staubecken (CB) gegeben werden, die beiderseits dieser Linien gelegen sind, und wobei die Zellen eine einheitliche Intensität erhalten, berechnet als die mittlere ($I_i^{MOY}$) Intensität der Punkte im Innern der Staubecken zur Bildung von Objektklassen, und wobei Nahtstellen (BD) zwischen den Paaren der Randpunkte (VDB) der angrenzenden Zellenpaare definiert werden, welche mit den Objekträndern übereinstimmen.

5. Verfahren nach Anspruch 2 oder nach einem der Ansprüche 3 oder 4, wobei man auf der eigentlichen Segmentationsstufe
eine Kostenfunktion (F) mit einem ersten Term definiert, der eine Funktion der Intensitätsvarianz ($\sigma^2$) im Innern der im Bild vorhandenen Zellen ist, und einen zweiten Term, der von einem variablen Wägungsfaktor ($\lambda$) gewägt wird und der eine Funktion der Intensitätsgradienten an den Randpunkten der Zellen ist, und man bewertet
eine Zusammenschlussschwelle ($\lambda_0$ (j, k)) für die Ausführung des Zusammenschlusses zweier angrenzender Zellen ($C_j$, $C_k$) eines Paares als Wert des variablen Wägungsfaktors ($\lambda$) zur Aufhebung der Differenz ($E_0$) zwischen der vor dem Zusammenschluss der beiden Zellen berechneten Kostenfunktion ($F_0$) und der nach diesem Zusammenschluss berechneten Kostenfunktion ($F_1$).

6. Verfahren nach Anspruch 5, in dem die Kostenfunktion gegeben wird mit der Formel:

$$F = \sum_{C_i} [I(x,y) - I_i^{MOY}]^2 + \lambda \sum_{VBD} 1/[1 + (\| G \| / \| G_0 \|)^2],$$

in der der erste Term die Funktion der Intensitätsvarianz ist, ausgedrückt durch eine erste Summierungsfunktion über alle Zellen ($C_i$) der Quadrate der Differenzen zwischen der Intensität I(x, y) eines Koordinatenvoxels (x, y) und der mittleren Intensität ($I_i^{MOY}$) in den Zellen ($C_i$), denen das Voxel angehört, und in der der zweite Term durch den Wägungsfaktor ($\lambda$) gewägt und durch eine zweite Summierungsfunktion über alle Voxelpaare an der Nahtstelle der Zellen mit einer spezifischen Messung gebildet wird, welche das Modul des normalisierten Gradienten (‖G‖/‖$G_0$‖) der Voxel dieser Nahtstellenpaare berücksichtigt,
und wobei die Zusammenschlussschwelle ($\lambda_0$ (j, k)), welche die Ausführung des Zusammenschlusses zweier aneinander angrenzender Zellen ($C_j$, $C_k$) ermöglicht, als eine Funktion der Differenzen der mittleren Intensitäten ($I_j^{MOY}$, $I_k^{MOY}$) zweier zusammenzuschließender Zellen und der Anzahl an Punkten ($m_j$, $m_k$) in diesen Zellen und die zweite Summierungsfunktion bewertet wird nach einer Formel:

$$\lambda_0(j,k) = m_j m_k (I_j^{MOY} - I_k^{MOY})^2 / (m_j + m_k) \sum_{VBD} 1/[1 + (\| G \|) / \| G_0 \|]$$

**7.** Verfahren nach einem der Ansprüche 5 oder 6, in dem man die besondere Zusammenschlussschwelle ($l_0{}^p$) bewertet, welche die gleichzeitige Ausführung mehrerer Zusammenschlüsse zweier aneinander angrenzender Zellen ($C_j$, $C_k$) in einer Folge von Stufen ermöglicht mit:

einer Bestimmung der Zusammenschlussschwellen ($\lambda_0$ (j, k)) der Zellen aller Paare im Bild,
einer Klassifizierung der Werte ($\lambda_0$ (j, k)) der Zusammenschlussschwelle nach ansteigenden Werten ($\lambda_0{}^p$), wobei die Anzahl dieser Werte höchstens gleich der Gesamtanzahl der im vor-segmentierten Bild ($1 \leq (\lambda_0{}^p \leq \lambda_0{}^{MAX})$ vorhandenen Nahtstellen ist,
einer Bestimmung von Abschnitten ($l_0{}^P$) dieser Werte der Faktoren der Zusammenschlussschwellen ($\lambda_0{}^p$), klassifiziert nach ansteigenden Werten,
einer Konstruktion eines einfachen Histogramms (51) der Anzahl ($h_0{}^p$) an Fällen von Zusammenschlüssen von angrenzenden Zellen respektive in jedem Abschnitt ($l_0{}^p$) der Werte der Zusammenschlussschwelle ($\lambda_0$ (j, k)),
einer Konstruktion eines kumulierten Histogramms (52) mit der Eintragung in jeden Abschnitt ($l_0{}^p$) der kumulierten Summe ($H_0{}^p$) der Anzahl der besagten Fälle ($h_0{}^p$) seit dem ersten Abschnitt ($l_0{}^p$) bis zum betrachteten Abschnitt ($l_0{}^P$), und dies in allen Abschnitten ($l_0{}^l$-($l_0{}^{MAX}$) der Werte der Zusammenschlussschwelle ($\lambda_0{}^p$), und
einer Definition der besagten besonderen Zusammenschlussschwelle als Abschnitt ($l_0{}^p$), welcher die Anzahl an Fällen ($H_0{}^p$) enthält, welche der vorbestimmten Anzahl an gesuchten gleichzeitigen Zusammenschlüssen entspricht.

**8.** Verfahren nach Anspruch 7, wo infolge der Festlegung der besonderen Schwelle man eine vorbestimmte Anzahl gleichzeitig zu entfernender Nahtstellen zwischen angrenzenden Zellenpaaren auswählt, man angrenzende Zellenpaare einsieht und jedes Mal dann einen Zusammenschluss angrenzender Paare ausführt, wenn die Zusammenschlussschwelle in Bezug auf diese Zellen ($\lambda_0$(j, k)) unter der besagten besonderen Zusammenschlussschwelle liegt ($l_0{}^p$).

**9.** Verfahren nach einem der vorhergehenden Ansprüche mit vor der Segmentationsstufe Stufen für die Aufnahme von Bilder zweidimensionaler (2-D)Intensität eines Volumens und mit Rekonstruktion eines verrauschten dreidimensionalen (3-D-)Bildes, und danach mit der Segmentationsstufe des dreidimensionalen Bildes in Objekt-Zellen und Hintergrund-Zellen, wobei die Stufen zur Rekonstruktion eines dreidimensionalen Bildes eine Methode zur Volumengebung einsetzen, um jedem Objekt respektive die individuelle Intensität der entsprechenden Zelle zuzuteilen.

**10.** Verfahren nach einem der vorhergehenden Ansprüche, bei dem das multidimensionale Bild ein medizinisches Blutgefäßbild ist.

**11.** Medizinisches Bildgebungsgerät mit einem Aufnahmesystem eines Bildes und einem Bildverarbeitungssystem, welches Zugriff auf die Bilddaten hat, und mit einem Bildanzeigesystem, welches einen Prozessor enthält, der ein solches Bildverarbeitungsverfahren nach einem der Ansprüche 1 bis 10 umsetzt.

**12.** Röntgenstrahlengerät mit einem medizinischen Bildgebungsgerät nach Anspruch 11.


**Claims**

**1.** A method for the processing of a multidimensional image which is formed by points representing objects which have an intensity which differs from one object to another, and are delimited from a background by way of their edges, which method includes steps (100; 30, 40) for segmenting the image, including:

a presegmentation step which includes a classification of image points in various elementary cells in conformity with a criterion which is a function of intensity gradients ($\|G\|$) of said points, which determines elementary cells having a respective uniform intensity, and which excludes cells which intersect or enclose an edge; and
an actual image segmentation step which includes the combination of adjacent cells in pairs in conformity with a merger criterion which puts into competition a first criterion which disfavors the merger of a pair of cells of different intensity and a second criterion which favors the merger of a pair of cells if the resultant cell does not intersect or enclose an edge.

**2.** A method as claimed in Claim 1, in which in actual segmentation step the first number of cells is reduced by classifying the cells into pairs of adjoining cells ($C_j$, $C_k$) while evaluating a merger threshold $\lambda_0(j,k)$ of the cells of the pairs as a function of the intensity variance ($\sigma^2$) and the intensity gradients ($\|G\|$) in the cells of each couple while evaluating a specific merger threshold ($I_0^p$) below which the adjoining cells of pairs are merged in a predetermined number ($H_0(p)$) and by performing the concomitant merger of adjoining cells of pairs having intensity characteristics which lead to a merger threshold which is lower than the specific threshold.

3. A method as claimed in Claim 2, in which the determination of elementary cells in the presegmentation step (30) is performed by transforming the multidimensional image into a topographic image by way of intensity gradient functions of the image points while identifying ($C_i$) the cells searched in catch basins (CB) and while identifying the edges bounding said cells at watershed lines (WS) of the topographic image.

4. A method as claimed in Claim 3, in which the points of the watershed lines (WS) are collected in the adjoining catch basins (CB) which are situated to both sides of these lines, in which the cells obtain a uniform intensity which is calculated as the mean value ($I_i^{MOY}$) of the intensity of the points within the catch basins and form a class of objects, and in which interfaces (BD) are defined between pairs of edge points (VBD) of the pairs of adjoining cells and coincide with object edges.

5. A method as claimed in Claim 2, or in one of the Claims 3 or 4, in which in the actual segmentation step:

   a cost function (F) is defined which comprises a first term which is a function of the intensity variance ($\sigma^2$) within the cells present in the image, and a second term which is weighted by a variable weighting factor ($\lambda$) and is a function of intensity gradients at the edge points of cells,
   and the merger threshold ($\lambda_0(j,k)$) is evaluated in order to perform the merging of two adjoining cells ($C_j$, $C_k$) of a pair as the value of the variable weighting factor ($\lambda$) which cancels the difference ($E_0$) between the cost function ($F_0$) calculated before the merging of two cells and the cost function ($F_1$) calculated after this merger.

6. A method as claimed in Claim 5, in which the cost function is given by the formule:

$$F = \sum_{C_i} \left[ I(X,Y) - I_i^{MOY} \right]^2 + \lambda \sum_{VBD} 1/\left[ 1 + \left( \|G\| / \|G_0\| \right)^2 \right]$$

in which the first term is the intensity variance function, expressed by a first function for the summing, over all cells ($C_i$), of the squares of the differences between the intensity ($I(x,y)$) of a voxel having the co-ordinates ($x,y$) and the mean intensity ($I_i^{MOY}$) in the cells ($C_i$) whereto this voxel belongs, and in which the second term is weighted by the weighting factor ($\lambda$) and is formed by a second function for the summing, over all pairs of voxels situated at the interface of the cells, of a specific measure which takes into account the modulus of the normalized gradient ($\|G\|/\|G_0\|$) of the voxels of these interface pairs,
   and in which the merger threshold ($\lambda_0(j,k)$) enabling the merger of two adjoining cells ($C_j$, $C_k$) to be performed is evaluated as a function of the differences of the mean intensities ($I_j^{MOY}$, $I_k^{MOY}$) of two cells to be merged, and of the number of points ($m_j$, $m_k$) in these cells, and of the second summing function in conformity with a formule:

$$\lambda_0(j.k) = m_j\, m_k \left( I_j^{MOY} - I_k^{MOY} \right)^2 / \left( m_j + m_k \right) \sum_{VBD} 1/\left[ 1 + \left( \|G\| \right) / \|G_0\| \right]$$
.

7. A method as claimed in one of the Claims 5 or 6, in which the specific merger threshold ($I_0^p$), enabling the concomitant execution of several mergers of each time two adjoining cells ($C_j$, $C_k$), is evaluated by a series of steps which include:

   determination of merger thresholds ($\lambda_0(j,k)$) for the cells of all pairs of the image,
   classification of these values ($\lambda_0(j,k)$) of the merger threshold according to increasing values

$$\left( \lambda_0^p \right),$$

the number of said values being at the most equal to the total number of interfaces present in the presegmented image ($I \leq \lambda_0^P \leq \lambda_0^{MAX}$ ),
determination of slices

$$\left( I_0^P \right)$$

of these values of merger threshold factors

$$\left( \lambda_0^P \right),$$

classified according to increasing values,
formation of a simple histogram (51) of the number

$$\left( h_0^P \right)$$

of merger events for adjoining cells in each respective slice

$$\left( I \frac{P}{0} \right)$$

of the merger threshold values ($\lambda_0(j,k)$),
formation of an accumulated histogram (52) while inscribing in each slice

$$\left( I \frac{P}{0} \right)$$

the acccumulated sum

$$\left( H_0^P \right)$$

of the number of said events

$$\left( h_0^P \right)$$

from the first slice

$$\left( I \frac{1}{0} \right)$$

until a slice considered

$$\left( l\, \frac{p}{0} \right),$$

that is, in all slices

$$\left( l\, {}_0^1 \, l\, {}_0^{MAX} \right)$$

of the merger threshold values

$$\left( \lambda_0^p \right),$$

and definition of said specific merger threshold as the slice

$$\left( l\, {}_0^p \right)$$

which comprises the number of events

$$\left( H\, {}_0^p \right)$$

corresponding to the predetermined number of concomitant

**8.** A method as claimed in Claim 7, in which at the end of the determination of the specific threshold there is selected a predetermined number of interfaces to be concomitantly eliminated between adjoining cells of pairs, the pairs of adjoining cells of the image are visited and adjoining cells of pairs are merged whenever the merger threshold relating to these cells ($\lambda_0(j,k)$) is below said specific merger threshold

$$\left( l\, {}_0^p \right).$$

**9.** A method as claimed in one of the preceding Claims which includes, prior to the segmentation step, steps for the acquisition of two-dimensional (2-D) intensity images of a volume and for the reconstruction of a noisy three-dimensional (3-D) image, and also includes, subsequent to the step for the segmentation of the three-dimensional image into object cells and background cells, steps for the reconstruction of a three-dimensional image by means of a method utilizing voluminal renditions where each object is attributed the respective individual intensity of the corresponding cell.

**10.** A method as claimed in one of the preceding Claims, in which the multidimensional image is a medical vascular image.

**11.** A medical imaging apparatus, including an image acquisition system and an image processing system which has access to the data of the image and to an image display system and comprises a processor for carrying out an image processing method as claimed in one of the Claims 1 to 10.

EP 0 945 830 B1

**12.** An X-ray apparatus, including a medical imaging apparatus as claimed in Claim 11.

**17**

ACQUISITION DE
PROJECTIONS 2-D BRUITEES ⟩ 11

⬇

SOUSTRACTION DU FOND ～12

⬇

CONSTRUCTION D'IMAGES
3-D BRUITEES ～13

⬇

REDUCTION DU BRUIT DE
L'IMAGE 3-D ～14

⟩ 10

⬇

SEGMENTATION DE
L'IMAGE 3-D ～100

⬇

RECONSTRUCTION DE L'IMAGE
3-D SEGMENTEE ～60

## FIG.1A

PRE-SEGMENTATION DE L'IMAGE
3-D DEBRUITEE ⟩ 30

⬇

SEGMENTATION DE L'IMAGE 3-D ～40

⟩ 100

⬇

RECONSTRUCTION DE L'IMAGE
3-D SEGMENTEE ～60

⬇                    ⬇

7 ～ AFFICHAGE        ENREGISTREMENT ～ 8

## FIG.1B

GRADIENTS $\|\vec{G}\|$, $\vec{J}$, $\|\vec{J}\|$ —— 31

MIN $\|\vec{G}\|$ —→ BASSINS VERSANTS CB —— 32

LIGNES DE PARTAGE DES EAUX WS —— 33

NUMEROTATION $CB_1 - CB_n$ —— 34

REPARTITION DES POINTS WS→BD —— 35

CELLULES PRESEGMENTEES $C_1 - C_n$ —— 36

$\Big\}$ 30

## FIG.2

COUPLES DE CELLULES $C_j$, $C_k$ —— 41

$I_j^{MOV}$, $I_k^{MOV}$; $m_j$, $m_k$; $\|G\|$ —— 42

SEUIL DE FUSION DE $C_j$, $C_k$
$E_0 = 0$ —→ $\lambda_0(j, k)$ —— 43

CLASSEMENT DES SEUILS $\lambda_0^1 - \lambda_0^{MAX}$ —— 44

HISTOGRAMME SIMPLE $h_0^p(\ell_0^p)$ —— 51

HISTOGRAMME CUMULE $H_0^p(\ell_0^p)$ —— 52

SEGMENTATION SELECTIVE DE L'IMAGE PAR POURCENTAGES SELECTIONNES AU MOYEN DES TRANCHES $\ell_0^p$ —— 53

$\Big\}$ 40

## FIG.3

$\|\vec{G}\|$

FIG.4A

FIG.4B

SCN

FIG.4C

FIG.8

FIG.5A

FIG.5B

FIG.6A

FIG.6B

FIG.7A

FIG.7B

FIG.7C